(19) Europäisches Patentamt
European Patent Office
Office européen des brevets

(11) EP 4 148 851 B1

(12) # EUROPEAN PATENT SPECIFICATION

(45) Date of publication and mention of the grant of the patent:
**13.05.2026 Bulletin 2026/20**

(21) Application number: **20939107.7**

(22) Date of filing: **05.06.2020**

(51) International Patent Classification (IPC):
***H01G 11/26*** *(2013.01)* ***H01G 11/46*** *(2013.01)*
***H01G 11/50*** *(2013.01)* ***H01M 10/0567*** *(2010.01)*
***H01M 4/62*** *(2006.01)* ***H01M 10/0525*** *(2010.01)*
***H01M 10/0569*** *(2010.01)* ***H01M 4/131*** *(2010.01)*
***H01M 4/525*** *(2010.01)* ***H01M 4/02*** *(2006.01)*
*H01G 11/24 (2013.01)* *H01G 11/38 (2013.01)*

(52) Cooperative Patent Classification (CPC):
**H01M 10/0525; H01G 11/26; H01G 11/46; H01G 11/50; H01M 4/131; H01M 4/525; H01M 4/62; H01M 10/0569;** H01G 11/24; H01G 11/38; H01M 2004/021; Y02E 60/10

(86) International application number:
**PCT/CN2020/094652**

(87) International publication number:
**WO 2021/243701 (09.12.2021 Gazette 2021/49)**

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.03.2023 Bulletin 2023/11**

(73) Proprietor: **Ningde Amperex Technology Limited
Zhangwan Town, Jiaocheng District
Ningde City
Fujian 352100 (CN)**

(72) Inventors:
- **WANG, Kefei
Ningde City, Fujian 352100 (CN)**
- **SHI, Liang
Ningde City, Fujian 352100 (CN)**

(74) Representative: **Kraus & Lederer PartGmbB
Thomas-Wimmer-Ring 15
80539 München (DE)**

(56) References cited:
**EP-A2- 1 179 869** **CN-A- 1 337 756**
**CN-A- 102 017 247** **CN-A- 102 318 109**
**CN-A- 103 582 973** **CN-A- 111 129 592**
**CN-A- 111 129 594** **JP-A- 2007 087 963**
**JP-A- 2009 176 598** **US-A1- 2011 045 360**
**US-A1- 2011 053 003** **US-A1- 2014 178 732**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 148 851 B1

## Description

### TECHNICAL FIELD

This application relates to the field of energy storage, specifically to an electrochemical apparatus and an electronic apparatus, and in particular to a lithium-ion battery.

### BACKGROUND

With the development of technologies and the increasing demands for mobile apparatuses, demands for electrochemical apparatuses (for example, lithium-ion batteries) have increased significantly, and thus higher requirements are imposed on performance of lithium-ion batteries, especially cycling performance of lithium-ion batteries.

Charge/discharge capacity of lithium-ion batteries decreases during cycling, thereby reducing the performance of lithium-ion batteries. The performance of lithium-ion batteries mainly depends on characteristics of the electrodes, electrolyte and separator. Performance of electrodes not only depends on characteristics of the current collector and the active material layer, but is also closely related to additives in the active material layer. The additive is conducive to dispersion of particles or bonding of interfaces in the active material layer. However, during preparation of a lithium-ion battery, problems such as difficulty in proportioning due to poor matching of raw materials are often found, which can adversely affect the performance of the lithium-ion battery.

US 2014/178732 A1 teaches a non-aqueous electrolyte secondary battery having a high capacity and an improved cycle life. The battery includes an electrode group and a non-aqueous electrolyte, and has a volume energy density of 650 Wh/L or more. The electrode group includes wound positive and negative electrodes with a separator interposed therebetween. The positive and negative electrodes each include a current collector and a material mixture layer adhering thereto. The positive and negative electrode material mixture layers each have a porosity Pp of 22% or less and porosity Pn of 25% or less. The ratio VE/VT of a volume VE of the electrolyte to a total VT of the pore volumes of the positive and negative electrode material mixture layers, and the separator is 1 to 1.5. The difference between contact angles CAp and CAn of the positive and negative electrodes with respect to the non-aqueous electrolyte is 23° or less.

US 2011/045360 A1 relates to a lithium ion secondary battery including: a positive electrode, a negative electrode, a separator disposed between the positive electrode and the negative electrode, and a non-aqueous electrolyte, wherein the non-aqueous electrolyte includes a non-aqueous solvent including a fluoroether, the positive electrode includes a positive electrode current collector and a positive electrode active material layer formed on the surface of the positive electrode current collector, the positive electrode active material layer includes lithium-containing composite oxide particles and a fluororesin, and a coverage of the fluororesin relative to the surface area of the lithium-containing composite oxide particles is 20 to 65%. It is an object of the invention to provide a lithium ion secondary battery that is kept from deteriorating in rate characteristics over time, in particular, from significantly deteriorating in rate characteristics during storage at high temperatures.

In view of this, it is necessary to provide an electrochemical apparatus and an electronic apparatus that have improved performance.

### SUMMARY

The present invention is defined in the appended claims. Embodiments of this application provide an electrochemical apparatus and an electronic apparatus, so as to resolve at least one problem existing in the related art to at least some extent.

The electrochemical apparatus according to the invention is defined by the features of claim 1. The electronic apparatus according to the invention is defined by the features of claim 10. Further embodiments of the invention are defined in the appended claims.

### DETAILED DESCRIPTION

Embodiments of this application are described in detail below. The embodiments of this application should not be construed as limitations on the application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A

may contain a single element or a plurality of elements. The item B may contain a single element or a plurality of elements. The item C may contain a single element or a plurality of elements. The term "at least one type of" has the same meaning as the term "at least one of".

An electrode (positive electrode or negative electrode) of an electrochemical apparatus (for example, lithium-ion battery) is generally prepared by the following method: mixing an active material, a conductive agent, a thickener, a binder and a solvent, and then applying the resulting slurry mix on a current collector. However, matching between the solvent and the binder or between the solvent and the active material is generally poor, so that proportioning is difficult. In addition, a theoretical capacity of the electrochemical apparatus may change with the type of the active material. As the cycling proceeds, charge/discharge capacity of the electrochemical apparatus generally decreases. This is because electrode interfaces of the electrochemical apparatus change during charging and/or discharging. The interfaces include an interface between the electrode and the electrolyte, an interface between the current collector and the electrode, and an interface between the electrode active material and an additive. Decreased interface stability causes the electrode active material to fail to play its function.

In this application, a specific positive electrode material is used to ensure interface stability of the electrochemical apparatus during cycling, thereby improving cycling performance, rate performance, and direct-current resistance of the electrochemical apparatus. The specific positive electrode material in this application is implemented by controlling a contact angle with a surface of the positive electrode active material layer. A method for controlling a contact angle may control the contact angle by adding an additive into the positive electrode slurry, or providing an additive coating on a surface of the positive electrode active material layer.

This application provides an electrochemical apparatus, including a positive electrode, a negative electrode, and an electrolyte as described below.

I. Positive electrode

The positive electrode includes a positive electrode current collector and a positive electrode active material layer disposed on one or both surfaces of the positive electrode current collector.

Positive electrode active material layer

The positive electrode active material layer contains a positive electrode active material. The positive electrode active material layer may be one or more layers, and each of the plurality of layers of the positive electrode active material may contain the same or different positive electrode active materials.

Contact angle

One characteristic of the electrochemical apparatus of this application is that a contact angle of the positive electrode active material layer with respect to a non-aqueous solvent, as measured by a contact angle measurement method, is not greater than 45°. In some embodiments, the contact angle of the positive electrode active material layer with respect to a non-aqueous solvent, as measured by the contact angle measurement method, is not greater than 40°. In some embodiments, the contact angle of the positive electrode active material layer with respect to a non-aqueous solvent, as measured by the contact angle measurement method, is not greater than 35°. When the positive electrode active material layer has the foregoing contact angle with respect to the non-aqueous solvent, a positive electrode active material layer interface has a suitable surface tension, allowing good infiltration of the electrolyte and good stability during charge and discharge cycles of the electrochemical apparatus, which can significantly improve the cycling performance, rate performance and direct-current resistance of the electrochemical apparatus.

The contact angle of the positive electrode active material layer with respect to the non-aqueous solvent can reflect a surface property of the positive electrode active material layer, which is one of physical and chemical parameters that characterize the positive electrode active material layer. A smaller contact angle means a smaller surface tension of the positive electrode active material layer, which can significantly improve the cycling performance, rate performance and direct-current internal resistance of the electrochemical apparatus. The contact angle of the positive electrode active material layer with respect to the non-aqueous solvent may be subjected to many factors, mainly including an additive and the like.

According to the present invention, the contact angle measurement method refers to, after 3 microliters of diethyl carbonate droplets are dropped on a surface of the positive electrode active material layer, measuring a contact angle of the droplets with the surface of the positive electrode active material layer within 100 seconds.

The contact angle of the positive electrode active material layer with respect to the non-aqueous solvent and a diameter of non-aqueous solvent droplets can be determined by using the following method: dropping 3 microliters of diethyl carbonate droplets on a surface of the positive electrode active material layer, measuring the diameter of the

droplets within 100 seconds by using a JC2000D3E contact angle measuring instrument, and performing fitting by using 5-point fitting method (that is, first taking 2 points on the left and right planes of the droplet to determine the liquid-solid interface, and then taking 3 points on the droplet arc) to obtain the contact angle of the positive electrode active material layer with respect to the non-aqueous solvent. Each sample is measured for at least three times, and at least 3 values with a difference of less than 5° are selected and averaged to obtain the contact angle of the positive electrode active material layer with respect to the non-aqueous solvent.

The non-aqueous solvent used in the contact angle measurement can be commonly used electrolyte solvents such as diethyl carbonate, ethyl methyl carbonate, dimethyl carbonate, methyl propyl carbonate, or methyl isopropyl carbonate.

Additive

According to some embodiments of this application, the positive electrode active material layer includes an additive. In some embodiments, the additive has a hydrophilic group and a lipophilic group.

In some embodiments, the additive has an oxidation potential of not less than 4.5 V and a reduction potential of not greater than 0.5 V. In some embodiments, the additive has an oxidation potential of not less than 5 V and a reduction potential of not greater than 0.3 V. The additive with the foregoing oxidation/reduction potential has stable electrochemical performance, helping improve the cycling performance, rate performance and direct-current resistance of the electrochemical apparatus.

In some embodiments, the surface tension of the additive is not greater than 40 mN/m. In some embodiments, the surface tension of the additive is not greater than 30 mN/m. In some embodiments, the surface tension of the additive is not greater than 25 mN/m. In some embodiments, the surface tension of the additive is not greater than 20 mN/m. In some embodiments, the surface tension of the additive is not greater than 15 mN/m. In some embodiments, the surface tension of the additive is not greater than 10 mN/m. The surface tension of the additive is measured under the condition of an additive NMP solution with a solid content of 1%. The additive with the foregoing surface tension makes the positive electrode active material layer have a good interface, helping improve the cycling performance, rate performance and direct-current resistance of the electrochemical apparatus.

The surface tension of the additive can be measured by using the following method: testing the additive NMP solution with a solid content of 1% by using the JC2000D3E contact angle measuring instrument, testing each sample for at least 3 times, and taking at least 3 values and averaging them to obtain the surface tension of the additive.

In some embodiments, the additive includes an unsaturated carboxylic acid group. In some embodiments, the unsaturated carboxylic acid group includes at least one of vinyl ester, vinyl chloride, acrylate, vinyl ether acrylate, crotonate, propiolate, butynoate or carboxylate modified with acrylamide, acrylonitrile and vinyl ether groups.

In some embodiments, the additive includes at least one of the following: 2-dodecyl acrylate, polyethylene glycol monomethyl ether acrylate, polyethylene glycol dimethacrylate, acrylic acid (2-ethylhexyl) acrylate, acrylate non-ionic fluorocarbon acrylate surfactant, dodecyl methacrylate, acrylic acid (ester) copolymer, copolymer of maleic and acrylic acid, or ethylene acrylic acid copolymer.

In some embodiments, based on a total weight of the positive electrode active material layer, a proportion of the additive is not greater than 3000 ppm. In some embodiments, based on the total weight of the positive electrode active material layer, the proportion of the additive is not greater than 2500 ppm. In some embodiments, based on the total weight of the positive electrode active material layer, the proportion of the additive is not greater than 2000 ppm. In some embodiments, based on the total weight of the positive electrode active material layer, the proportion of the additive is not greater than 1500 ppm. In some embodiments, based on the total weight of the positive electrode active material layer, the proportion of the additive is not greater than 1000 ppm. In some embodiments, based on the total weight of the positive electrode active material layer, the proportion of the additive is not greater than 500 ppm. In some embodiments, based on the total weight of the positive electrode active material layer, the proportion of the additive is not greater than 200 ppm. The proportion of the additive being within the foregoing ranges helps improve the cycling performance, rate performance, and direct-current resistance of the electrochemical apparatus.

Positive electrode active material

The type of the positive electrode active material is not particularly limited, provided that metal ions (for example, lithium ions) can be electrochemically absorbed and released. In some embodiments, the positive electrode active material is a material that contains lithium and at least one transition metal. Examples of the positive electrode active material may include, but are not limited to, a lithium transition metal composite oxide and a lithium-containing transition metal phosphate compound.

In some embodiments, the positive electrode active material includes lithium-containing transition metal oxides having different median particle sizes. In some embodiments, the lithium-containing transition metal oxides having

different median particle sizes have the same or different chemical compositions.

In some embodiments, the lithium-containing transition metal oxide includes a compound represented by a general formula (1),

$$Li_aM1_bM2_cM3_dO_2 \qquad (1)$$

where:

M1 is selected from at least one of Co, Ni, or Mn;
M2 is selected from at least one of Mg, Ti, Zr, Ge, Nb, Al, and Sn;
M3 is an element other than Li, M1, and M2;

$$0.5 \leq a < 1.1;$$

$$0.8 \leq b < 1.2;$$

$$0.002 \leq c \leq 0.05;$$

and

$$0 \leq d \leq 0.05.$$

In some embodiments, M1 includes at least one of Co or Ni. When M1 includes at least one of Co or Ni, a proportion of the at least one of Co or Ni in the lithium-containing transition metal oxide is not less than 50 mol%; in some embodiments, not less than 60 mol%; in some embodiments, not less than 70 mol%; in some embodiments, not less than 80 mol%; or in some embodiments, not less than 90 mol%.

In some embodiments, M1 includes Co. In some embodiments, M1 is Co. When M1 includes Co, a proportion of Co in the lithium-containing transition metal oxide is not less than 30 mol%; in some embodiments, not less than 50 mol%; in some embodiments, not less than 65 mol%; in some embodiments, not less than 80 mol%; in some embodiments, not less than 90 mol%; or in some embodiments, not less than 95 mol%. The lithium-containing transition metal oxide containing Co helps increase density of the positive electrode active material layer. The Co content in the lithium-containing transition metal oxide within the foregoing ranges may further increase the density of the positive electrode active material layer.

In some embodiments, M2 includes Mg. In some embodiments, with respect to the M1 content, a proportion of Mg is not less than 0.01 mol%. In some embodiments, with respect to the M1 content, the proportion of Mg is not less than 0.05 mol%. In some embodiments, with respect to the M1 content, the proportion of Mg is not less than 0.07 mol%. In some embodiments, with respect to the M1 content, the proportion of Mg is not greater than 0.5 mol%. In some embodiments, with respect to the M1 content, the proportion of Mg is not greater than 0.2 mol%. In some embodiments, with respect to the M1 content, the proportion of Mg is not greater than 0.1 mol%. In some embodiments, with respect to the M1 content, the proportion of Mg falls within a range defined by any two of the foregoing endpoints. When the proportion of Mg in the lithium-containing transition metal oxide falls within the foregoing ranges, the element Mg can effectively play its function, improving the cycling performance, rate performance, and direct-current resistance of the electrochemical apparatus.

In some embodiments, M2 further includes at least one of Ti, Zr, Ge, Nb, Al, and Sn.

In some embodiments, M2 further includes at least one of Ti, Zr, Ge, or Nb. In some embodiments, with respect to the M1 content, a proportion of the at least one of Ti, Zr, Ge, or Nb is not less than 0.005 mol%. In some embodiments, with respect to the M1 content, the proportion of the at least one of Ti, Zr, Ge, or Nb is not less than 0.008 mol%. In some embodiments, with respect to the M1 content, the proportion of the at least one of Ti, Zr, Ge, or Nb is not less than 0.01 mol%. In some embodiments, with respect to the M1 content, the proportion of the at least one of Ti, Zr, Ge, or Nb is not greater than 0.3 mol%. In some embodiments, with respect to the M1 content, the proportion of the at least one of Ti, Zr, Ge, or Nb is not greater than 0.1 mol%. In some embodiments, with respect to the M1 content, the proportion of the at least one of Ti, Zr, Ge, or Nb is not greater than 0.05 mol%. In some embodiments, with respect to the M1 content, the proportion of the at least one of Ti, Zr, Ge, or Nb falls within a range defined by any two of the foregoing endpoints. The proportion of the at least one of Ti, Zr, Ge, or Nb in the lithium-containing transition metal oxide being within the foregoing ranges helps improve

the cycling performance, rate performance, and direct-current resistance of the electrochemical apparatus.

In some embodiments, M2 further includes at least one of Al or Sn. In some embodiments, with respect to the M1 content, a proportion of the at least one of Al or Sn is not less than 0.01 mol%. In some embodiments, with respect to the M1 content, the proportion of the at least one of Al or Sn is not less than 0.05 mol%. In some embodiments, with respect to the M1 content, the proportion of the at least one of Al or Sn is not less than 0.07 mol%. In some embodiments, with respect to the M1 content, the proportion of the at least one of Al or Sn is not greater than 0.5 mol%. In some embodiments, with respect to the M1 content, the proportion of the at least one of Al or Sn is not greater than 0.2 mol%. In some embodiments, with respect to the M1 content, the proportion of the at least one of Al or Sn is not greater than 0.1 mol%. In some embodiments, with respect to the M1 content, the proportion of the at least one of Al or Sn falls within a range defined by any two of the foregoing endpoints. The proportion of the at least one of Al or Sn in the lithium-containing transition metal oxide being within the foregoing ranges helps improve the cycling performance, rate performance, and direct-current resistance of the electrochemical apparatus.

In some embodiments, $0.004 \leq c \leq 0.02$. In some embodiments, $0.006 \leq c \leq 0.01$. The c being within the foregoing ranges may improve the cycling performance, rate performance, and direct-current resistance of the lithium-ion battery.

The lithium-containing transition metal oxide may contain M2 in a plurality of manners, which is not particularly limited. In some embodiments, M2 is present in lithium-containing transition metal oxide particles. In some embodiments, M2 is uniformly solid dispersed in the lithium-containing transition metal oxide. In some embodiments, M2 presents composition uniformity in the lithium-containing transition metal oxide. In some embodiments, M2 forms a compound layer on the surface of the lithium-containing transition metal oxide.

In some embodiments, M3 includes at least one of the following elements: alkali metal elements other than Li, alkaline earth metal elements other than Mg, Group IIIa metal elements, Group IVb metal elements other than Ti and Zr, Group Vb metal elements other than Nb, Group VIb metal elements, Group VIIb metal elements other than Mn, Group VIII metal elements other than Co and Ni, Group Ib metal elements, Zn, Group IIIa metal elements other than Al, Group IVa metal elements other than Sn and Pb, P or Bi.

In some embodiments, M3 includes at least one of the following elements: Na, K, Rb, Be, Ca, Sr, Ba, Sc, Y, La, Hf, V, Ta, Cr, Mo, W, Tc, Re, Fe, Ru, Rh, Cu, Ag, Au, Zn, B, Ca, In, Si, P, or Bi.

In some embodiments, the lithium-containing transition metal oxide contains no M3 (that is, d=0).

In some embodiments, the lithium-containing transition metal oxide includes at least one of $LiNi_{0.81}Co_{0.16}Al_{0.03}O_2$, $LiNi_{0.81}Co_{0.16}Mg_{0.03}O_2$, $LiNi_{0.81}Co_{0.16}Si_{0.03}O_2$, $LiNi_{0.81}Co_{0.16}Ti_{0.03}O_2$, $LiCo_{0.96}Ti_{0.04}O_2$, $LiCo_{0.998}Mg_{0.0008}Ti_{0.0004}Al_{0.0008}O_2$, $LiCo_{0.994}Mg_{0.0024}Ti_{0.0012}Al_{0.0024}O_2$, $LiCo_{0.9988}Mg_{0.0008}Ti_{0.0004}O_2$, $LiCo_{0.9964}Mg_{0.0024}Ti_{0.0012}O_2$ or $LiCo_{0.334}Ni_{0.33}Mn_{0.33}Mg_{0.0024}Ti_{0.0012}Al_{0.0024}O_2$.

A proportion of each of the elements in the lithium-containing transition metal oxide can be obtained through analysis with an inductively coupled plasma (ICP). A lithium content in the lithium-containing transition metal oxide can also be measured by using other methods (for example, atomic absorption method). Specifically, approximately 5 g of the lithium-containing transition metal oxide is accurately weighed and added to a 200 ml beaker, then 100 ml of aqua regia is added, and then the mixture is heated and concentrated to a liquid volume of 20 to 25 ml, and cooled. Solids are separated with quantitative filter paper "No.5B" manufactured by Advantec. The filtrate and lotion are then added to a 100 ml measuring flask for constant volume dilution, and element contents are measured with the sequential ICP-type analyzer "IPIS 1000" manufactured by Nippon Jarrell-Ash Co., Ltd.

In some embodiments, based on the total weight of the positive electrode active material layer, a proportion of the lithium-containing transition metal oxide is not greater than 99 wt%. In some embodiments, based on the total weight of the positive electrode active material layer, the proportion of the lithium-containing transition metal oxide is not greater than 97.5 wt%. In some embodiments, based on the total weight of the positive electrode active material layer, the proportion of the lithium-containing transition metal oxide is not greater than 97 wt%. In some embodiments, based on the total weight of the positive electrode active material layer, the proportion of the lithium-containing transition metal oxide is not greater than 98 wt%. In some embodiments, based on the total weight of the positive electrode active material layer, the proportion of the lithium-containing transition metal oxide is not greater than 95 wt%. In some embodiments, based on the total weight of the positive electrode active material layer, the proportion of the lithium-containing transition metal oxide is not less than 85 wt%. In some embodiments, based on the total weight of the positive electrode active material layer, the proportion of the lithium-containing transition metal oxide is not greater than 90 wt%. In some embodiments, based on the total weight of the positive electrode active material layer, the proportion of the lithium-containing transition metal oxide is not greater than 92 wt%. In some embodiments, based on the total weight of the positive electrode active material layer, the proportion of the lithium-containing transition metal oxide falls within a range defined by any two of the foregoing endpoints. When the proportion of the lithium-containing transition metal oxide in the positive electrode active material layer falls within the foregoing ranges, the positive electrode active material layer has high capacity and low resistance and facilitates the ease of formation of the positive electrode.

In some embodiments, the lithium-containing transition metal oxide contains first particles and second particles, where the first particles have a first median particle size, the second particles have a second median particle size, and the

first median particle size is less than the second median particle size.

In some embodiments, the first median particle size is 0.5 μm to 10 μm. In some embodiments, the first median particle size is 1 μm to 8 μm. In some embodiments, the first median particle size is 2 μm to 6 μm. In some embodiments, the second median particle size is 11 μm to 30 μm. In some embodiments, the second median particle size is 12 μm to 25 μm. In some embodiments, the second median particle size is 13 μm to 20 μm.

In some embodiments, a discharge capacity of the positive electrode active material is less than a rechargeable capacity of the negative electrode active material to prevent lithium metal from unexpectedly precipitating onto the negative electrode during charging.

The median particle size of the lithium-containing transition metal oxide can be adjusted by the following method: dropwise adding NaOH to an acidic aqueous solution of the transition metal element M1, followed by precipitation to obtain a hydroxide of M1; and sintering the hydroxide of M1 to obtain an oxide of M1. The median particle size of the lithium-containing transition metal oxide can be controlled by controlling the precipitation time, the precipitated particle size, and the particle size of the M1 oxide obtained by sintering.

In some embodiments, a discharge capacity of the positive electrode active material is less than a rechargeable capacity of the negative electrode active material to prevent lithium metal from unexpectedly precipitating onto the negative electrode during charging.

Density of the positive electrode active material layer

In some embodiments, the density of the positive electrode active material layer is not less than 3.5 g/cm$^3$. In some embodiments, the density of the positive electrode active material layer is not less than 3.6 g/cm$^3$. In some embodiments, the density of the positive electrode active material layer is not less than 3.8 g/cm$^3$. In some embodiments, the density of the positive electrode active material layer is not greater than 4.6 g/cm$^3$. In some embodiments, the density of the positive electrode active material layer is not greater than 4.4 g/cm$^3$. In some embodiments, the density of the positive electrode active material layer is not greater than 4.2 g/cm$^3$. In some embodiments, the density of the positive electrode active material layer falls within a range defined by any two of the foregoing endpoints. When the density of the positive electrode active material layer falls within the foregoing ranges, the positive electrode active material layer has good infiltrability, which helps improve performance of the electrochemical apparatus.

The density of the positive electrode active material layer can be measured by using the following method: cutting to take a specified area of the positive electrode, using an electronic balance with a minimum scale of 1 mg to measure its weight W1, and using a micrometer with a minimum scale of 1 μm to measure a thickness T1 of the positive electrode; peeling off the positive electrode current collector, using the electronic balance to measure its weight W2, and using the micrometer to measure a thickness T2 of the positive electrode current collector; and recording W1-W2 as a weight of the positive electrode active material layer, and T1-T2 as a thickness of the positive electrode active material layer. The volume of the positive electrode active material layer is calculated based on the thickness and area of the positive electrode active material layer, and then the density of the positive electrode active material layer is calculated based on the weight and volume of the positive electrode active material layer.

Thickness of the positive electrode active material layer

In some embodiments, the thickness of the positive electrode active material layer is 30 μm to 200 μm. In some embodiments, the thickness of the positive electrode active material layer is 50 μm to 180 μm. In some embodiments, the thickness of the positive electrode active material layer is 80 μm to 150 μm. In some embodiments, the thickness of the positive electrode active material layer is 100 μm to 120 μm. In some embodiments, the thickness of the positive electrode active material layer is 30 μm, 50 μm, 80 μm, 100 μm, 120 μm, 150 μm, 180 μm, 200 μm, or falls within a range defined by any two of the foregoing values.

The thickness of the positive electrode active material layer can be measured by using the following method: cutting to take a piece of the positive electrode, and using a micrometer with a minimum scale of 1 μm to measure a thickness T1 of the positive electrode; peeling off the positive electrode current collector, and using the micrometer to measure a thickness T2 of the positive electrode current collector; and recording T1-T2 as a thickness of the positive electrode active material layer.

Conductive layer

In some embodiments, the positive electrode active material layer may further include a conductive layer, and the conductive layer includes a conductive agent. In some embodiments, the conductive layer includes no positive electrode active material. Examples of the conductive agent include, but are not limited to, graphite, carbon black, or acetylene black.

In some embodiments, based on the total weight of the positive electrode active material layer, a proportion of the

conductive agent is not less than 1 wt%. In some embodiments, based on the total weight of the positive electrode active material layer, the proportion of the conductive agent is not less than 1.1 wt%. In some embodiments, based on the total weight of the positive electrode active material layer, the proportion of the conductive agent is not less than 1.2 wt%. In some embodiments, based on the total weight of the positive electrode active material layer, the proportion of the conductive agent is not greater than 3 wt%. In some embodiments, based on the total weight of the positive electrode active material layer, the proportion of the conductive agent is not greater than 2 wt%. In some embodiments, based on the total weight of the positive electrode active material layer, the proportion of the conductive agent is not greater than 1.5 wt%. In some embodiments, based on the total weight of the positive electrode active material layer, the proportion of the conductive layer falls within a range defined by any two of the foregoing values. The proportion of the conductive layer in the positive electrode active material layer being within the foregoing ranges helps improve the density and capacity of the positive electrode active material layer, thereby improving cycling performance of the electrochemical apparatus and reducing load characteristics of the electrochemical apparatus.

Binder

In some embodiments, the positive electrode active material layer includes a binder. Examples of the binder include, but are not limited to, polyvinylidene fluoride or polytetrafluoroethylene.

In some embodiments, based on the total weight of the positive electrode active material layer, a proportion of the binder is not less than 1 wt%. In some embodiments, based on the total weight of the positive electrode active material layer, the proportion of the binder is not less than 1.3 wt%. In some embodiments, based on the total weight of the positive electrode active material layer, the proportion of the binder is not less than 1.5 wt%. In some embodiments, based on the total weight of the positive electrode active material layer, the proportion of the binder is not greater than 4 wt%. In some embodiments, based on the total weight of the positive electrode active material layer, the proportion of the binder is not greater than 3 wt%. In some embodiments, based on the total weight of the positive electrode active material layer, the proportion of the binder is not greater than 2 wt%. In some embodiments, based on the total weight of the positive electrode active material layer, the proportion of the binder falls within a range defined by any two of the foregoing values. When the proportion of the binder in the positive electrode active material layer is within the foregoing ranges, good adhesion exists between the positive electrode active material layer and the positive electrode current collector, avoiding the possibility of the positive electrode being powdered and falling off, and thereby helping improve stability of the positive electrode.

Positive electrode current collector

The positive electrode current collector is not particularly limited to any type and may be any material known as being applicable to serve as a positive electrode current collector. Examples of the positive electrode current collector may include, but are not limited to, at least one of aluminum, aluminum alloy, nickel-plated aluminum, stainless steel, titanium, or tantalum, and carbon materials such as carbon cloth and carbon paper. In some embodiments, the positive electrode current collector is a metal material. In some embodiments, the positive electrode current collector is aluminum.

The form of the positive electrode current collector is not particularly limited. When the positive electrode current collector is a metal material, the positive electrode current collector may take forms including but not limited to a metal foil, a metal cylinder, a metal coil, a metal plate, a metal film, a sheet metal mesh, a punched metal, a foamed metal, and the like. When the positive electrode current collector is a carbon material, the positive electrode current collector may take forms including but not limited to a carbon plate, a carbon film, a carbon cylinder, and the like. In some embodiments, the positive electrode current collector is a metal film. In some embodiments, the metal film is a mesh.

In some embodiments, a thickness of the positive electrode current collector is 8 μm to 20 μm. In some embodiments, the thickness of the positive electrode current collector is 10 μm to 18 μm. In some embodiments, the thickness of the positive electrode current collector is 12 μm to 15 μm. In some embodiments, the thickness of the positive electrode current collector falls within a range defined by any two of the foregoing values.

In order to reduce the electronic contact resistance of the positive electrode current collector and the positive electrode active material layer, a conductive agent may be included in the surface of the positive electrode current collector. Examples of the conductive agent may include, but are not limited to, carbon and precious metals such as gold, platinum, and silver.

The method for preparing a positive electrode is not limited in this application. For example, the positive electrode may be prepared by using the following method: mixing two or more lithium-containing transition metal oxides having different median particle sizes in a specified weight ratio, adding a conductive agent and a binder as needed, and adding a solvent to obtain a positive electrode mixture slurry; applying the obtained positive electrode mixture slurry on the positive electrode current collector (such as aluminum foil), and drying the slurry to obtain a positive electrode active material layer; and applying the positive electrode active material layer on one or two surfaces of the positive electrode current collector, and performing a rolling step as needed to obtain a positive electrode.

II. Electrolyte

The electrolyte used in the electrochemical apparatus of this application includes an electrolytic salt and a solvent for dissolving the electrolytic salt. According to the present invention, the electrolyte used in the electrochemical apparatus of this application further includes an additive.

More particular, the electrolyte contains a compound of formula 1:

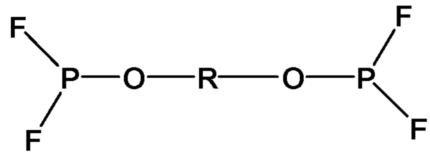
formula 1

where R is a substituted or unsubstituted $C_1$-$C_{10}$ alkyl group, and in the case of substitution, a substituent group is halogen.

In some embodiments, the compound of formula 1 contains at least one of the following structural formulas:

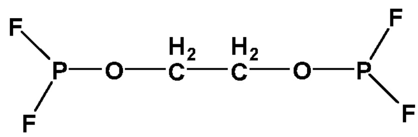
formula 1a;

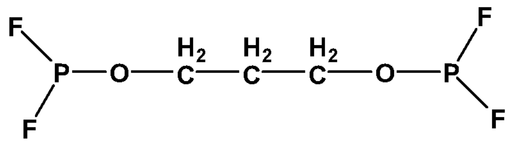
formula 1b; or

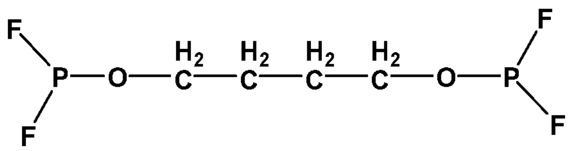
formula 1c.

According to the present invention, based on the total weight of the electrolyte, a proportion of the compound of formula 1 is 0.001 wt% to 2 wt%. In some embodiments, based on the total weight of the electrolyte, the proportion of the compound of formula 1 is 0.01 wt% to 1 wt%. In some embodiments, based on the total weight of the electrolyte, the proportion of the compound of formula 1 is 0.05 wt% to 0.5 wt%. In some embodiments, based on the total weight of the electrolyte, the proportion of the compound of formula 1 is 0.1 wt% to 0.3 wt%. In some embodiments, based on the total weight of the electrolyte, the proportion of the compound of formula 1 is 0.001 wt%, 0.005 wt%, 0.01 wt%, 0.05 wt%, 0.1 wt%, 0.3 wt%, 0.5 wt%, 0.8 wt%, 1 wt%, 1.2 wt%, 1.5 wt%, 1.8 wt%, 2 wt%, or falls within a range defined by any two of the foregoing values. The proportion of the compound of formula 1 in the electrolyte being within the foregoing ranges helps further improve the cycling performance, rate performance, and direct-current resistance of the lithium-ion battery.

In some embodiments, X mg of the compound of formula 1 in the electrolyte and a reaction area Y $m^2$ of the positive electrode active material layer satisfy the following relationship: $10 \leq X/Y \leq 100$. **In** some embodiments, X and Y satisfy the following relationship: $20 \leq X/Y < 100$. In some embodiments, X and Y satisfy the following relationship: $20 \leq X/Y < 70$. X and Y satisfying the foregoing relationships help further improve the cycling performance, rate performance, and direct-current resistance of the lithium-ion battery.

The reaction area of the positive electrode active material layer can be measured by using the following method: using a surface area meter (a full-automatic surface area measuring apparatus manufactured by Ohkura Riken Co., Ltd.) to predry the sample in a stream of nitrogen gas at 350°C for 15 minutes, and using a nitrogen-helium gas mixture with the nitrogen pressure relative to the atmospheric pressure being accurately adjusted to 0.3 to conduct tests by using single point BET nitrogen adsorption utilizing a gas flow method. The specific surface area of the positive electrode active material layer is measured by using this method. The specific surface area of the positive electrode active material layer refers to a specific surface area of the entire positive electrode active material layer including the positive electrode active material and the additives (binder, conductive agent, thickener, filler, and the like). A weight of the positive electrode active material layer is measured, that is, the total weight of the positive electrode active material layer including the positive electrode active material and the additives (binder, conductive agent, thickener, filler, and the like). The reaction area of the

positive electrode active material layer is calculated by using the following equation:
Reaction area=specific surface area of the positive electrode active material layer×weight of the positive electrode active material layer.

In some embodiments, the electrolyte further contains any non-aqueous solvent that is known in the art and that may be used as a solvent for the electrolyte.

In some embodiments, the non-aqueous solvent includes, but is not limited to, one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include, but are not limited to, one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include, but are not limited to, one or more of the following: dimethyl carbonate, ethyl methyl carbonate, diethyl carbonate (DEC), methyl n-propyl carbonate, ethyl n-propyl carbonate, dipropyl carbonate, and the like. Examples of the linear carbonate substituted with fluorine may include, but are not limited to, one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, examples of the cyclic carboxylate may include, but are not limited to, one or more of the following: γ-butyrolactone and γ-valerolactone. In some embodiments, some hydrogen atoms in the cyclic carboxylate may be replaced with fluorine.

In some embodiments, examples of the linear carboxylates may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be replaced with fluorine. In some embodiments, examples of the fluorine-substituted linear carboxylate may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include, but are not limited to, one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, tris (2,2,3,3,3-pentafluoropropyl) phosphate, and the like.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be replaced with fluorine.

In some embodiments, the aromatic fluorine-containing solvent includes, but is not limited to, one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, the solvent used in the electrolyte in this application includes at least one of ethylene carbonate, propylene carbonate, diethyl carbonate, ethyl propionate, propyl propionate, propyl acetate, or ethyl acetate. In some embodiments, the solvent used in the electrolyte in this application includes ethylene carbonate, propylene carbonate, diethyl carbonate, ethyl propionate, propyl propionate, γ-butyrolactone, and a combination thereof.

With cyclic carboxylate and/or chain carboxylate added into the electrolyte, the cyclic carboxylate and/or chain carboxylate may form a passivation film on a surface of the electrode to improve the capacity retention rate of the electrochemical apparatus after intermittent charge cycles. In some embodiments, 1% to 60% of the electrolyte is chain carboxylates, cyclic carboxylates, and a combination thereof. In some embodiments, the electrolyte contains ethyl propionate, propyl propionate, γ-butyrolactone, and a combination thereof, and based on the total weight of the electrolyte,

a proportion of the combination is 1% to 60%, 10% to 60%, 10% % to 50%, or 20% to 50%. In some embodiments, based on the total weight of the electrolyte, 1% to 60%, 10% to 60%, 20% to 50%, 20% to 40%, or 30% of the electrolyte is propyl propionate.

In some embodiments, examples of the additive may include, but are not limited to, one or more of the following: fluorocarbonate, carbon-carbon double bond-containing ethylene carbonate, sulfur-oxygen double bond-containing compound, and anhydride.

In some embodiments, based on the total weight of the electrolyte, a proportion of the additive is 0.01% to 15%, 0.1% to 10%, or 1% to 5%.

According to an embodiment of this application, based on the total weight of the electrolyte, the proportion of the propionate is 1.5 to 30 times, 1.5 to 20 times, 2 to 20 times, or 5 to 20 times of the proportion of the additive.

In some embodiments, the additive includes one or more fluorocarbonates. During charging/discharging of the lithium-ion battery, the fluorocarbonate may act with the propionate to form a stable protective film on the surface of the negative electrode, so as to suppress decomposition reaction of the electrolyte.

In some embodiments, the fluoroethylene carbonate has a formula $C{=}O(OR_1)(OR_2)$, where $R_1$ and $R_2$ each are selected from an alkyl group or haloalkyl group having 1 to 6 carbon atoms. At least one of $R_1$ and $R_2$ is selected from a fluoroalkyl group having 1 to 6 carbon atoms. $R_1$ and $R_2$, optionally together with the atoms to which they are attached, form a 5- to 7-membered ring.

In some embodiments, examples of the fluoroethylene carbonate may include, but are not limited to, one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, 4-fluoro-5-methyl ethylene carbonate, and the like.

In some embodiments, the additive includes one or more carbon-carbon double bond-containing ethylene carbonates. Examples of the carbon-carbon double bond-containing ethylene carbonate may include, but are not limited to, one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, 1,1-diethyl-2-methylene ethylene carbonate, and the like. In some embodiments, the carbon-carbon double bond containing ethylene carbonate includes vinylidene carbonate, and can easily achieve better effects.

In some embodiments, the additive includes one or more sulfur-oxygen double bond-containing compounds. Examples of the sulfur-oxygen double bond-containing compound may include, but are not limited to one or more of the following: cyclic sulfate, linear sulfate, linear sulfonate, cyclic sulfonate, linear sulfite, cyclic sulfite, and the like.

Examples of the cyclic sulfate may include, but are not limited to, one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate, and the like.

Examples of the linear sulfate may include, but are not limited to, one or more of the following: dimethyl sulfate, ethyl methyl sulfate, diethyl sulfate, and the like.

Examples of the linear sulfonate may include, but are not limited to, one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, ethyl 2-(methanesulfonyloxy) propionate, and the like.

Examples of the cyclic sulfonate may include, but are not limited to, one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, ethylene methane disulfonate, and the like.

Examples of the linear sulfite may include, but are not limited to, one or more of the following: dimethyl sulfite, ethyl methyl sulfite, diethyl sulfite, and the like.

Examples of the cyclic sulfite may include, but are not limited to, one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite, and the like.

In some embodiments, the additive includes one or more acid anhydrides. Examples of the acid anhydride may include, but are not limited to, one or more of cyclic phosphoric anhydride, carboxylic anhydride, disulfonic anhydride, and carboxylic acid sulfonic anhydride. Examples of the cyclic phosphoric anhydride may include, but are not limited to, one or more of trimethylphosphoric acid cyclic anhydride, triethylphosphoric acid cyclic anhydride, and tripropylphosphoric acid cyclic anhydride. Examples of the carboxylic anhydride may include, but are not limited to, one or more of succinic

anhydride, glutaric anhydride, and maleic anhydride. Examples of the disulfonic acid anhydride may include, but are not limited to, one or more of ethane disulfonic acid anhydride and propane disulfonic acid anhydride. Examples of the carboxylic acid sulfonic anhydride may include, but are not limited to, one or more of sulfobenzoic anhydride, sulfopropionic anhydride, and sulfobutyric anhydride.

In some embodiments, the additive is a combination of fluorocarbonate and carbon-carbon double bond containing ethylene carbonate. **In** some embodiments, the additive is a combination of fluorocarbonate and the sulfur-oxygen double bond-containing compound. **In** some embodiments, the additive is a combination of fluorocarbonate and a compound having 2 to 4 cyano groups. **In** some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

The electrolytic salt is not particularly limited. Any material commonly known as being applicable to serve as an electrolytic salt can be used. For lithium secondary batteries, lithium salts are typically used. Examples of the electrolytic salt may include, but are not limited to, inorganic lithium salts such as $LiPF_6$, $LiBF_4$, $LiClO_4$, $LiAlF_4$, $LiSbF_6$, $LiTaF_6$, and $LiWF_7$; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a total weight of the electrolytic salt, a proportion of the salt selected from the group consisting of monofluorophosphate, borate, oxalate, and fluorosulfonate is greater than 0.01 wt% or greater than 0.1 wt%. In some embodiments, based on the total weight of the electrolytic salt, the proportion of the salt selected from the group consisting of monofluorophosphate, borate, oxalate, and fluorosulfonate is less than 20 wt% or less than 10 wt%. In some embodiments, the proportion of the salt selected from the group consisting of monofluorophosphate, borate, oxalate, and fluorosulfonate falls within a range defined by any two of the foregoing values.

In some embodiments, the electrolytic salt includes more than one material selected from the group consisting of monofluorophosphate, borate, oxalate, and fluorosulfonate, and more than one other salt different from the more than one material. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the total weight of the electrolytic salt, a proportion of the other salt is greater

than 0.01 wt% or greater than 0.1 wt%. In some embodiments, based on the total weight of the electrolytic salt, the proportion of the other salt is less than 20 wt%, less than 15 wt%, or less than 10 wt%. In some embodiments, the proportion of the other salt falls within a range defined by any two of the foregoing values. The other salt having the foregoing proportion helps balance the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries may be used, and examples thereof may include, but are not limited to, vinylidene carbonate, succinic anhydride, biphenyls, cyclohexylbenzene, 2,4-difluoroanisole, propane sulfonate, propylene sulfonate, and the like. These additives may be used alone or in any combination. In addition, a proportion of these additives in the electrolyte is not particularly limited and may be set as appropriate to the types of the additives and the like. In some embodiments, based on the total weight of the electrolyte, the proportion of the additive is less than 5 wt%, within a range of 0.01 wt% to 5 wt%, or within a range of 0.2 wt % to 5 wt%.

## III. Negative electrode

The negative electrode includes a negative electrode current collector and a negative electrode active material layer disposed on one or both surfaces of the negative electrode current collector. The negative electrode active material layer contains a negative electrode active material. The negative electrode active material layer may be one or more layers, and each of the plurality of layers of the negative electrode active material may contain the same or different negative electrode active materials. The negative electrode active material is any material capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

As a current collector for holding the negative electrode active material, the negative electrode current collector may use any known current collector. Examples of the negative electrode current collector include, but are not limited to, metal materials such as aluminum, copper, nickel, stainless steel, and nickel plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal foil, a sheet metal mesh, a punched metal, a foamed metal, and the like. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 μm or greater than 5 μm. In some embodiments, the thickness of the negative electrode current collector is less than 100 μm or less than 50 μm. In some embodiments, the thickness of the negative electrode current collector falls within a range defined by any two of the foregoing values.

The negative electrode active material is not particularly limited, provided that it can reversibly absorb and release lithium ions. Examples of the negative electrode active material may include, but are not limited to, carbon materials such as natural graphite and artificial graphite; metals such as silicon (Si) and tin (Sn); oxides of metal elements such as Si and Sn; or the like. The negative electrode active material may be used alone or in combination.

The negative electrode active material layer may further include a negative electrode binder. The negative electrode binder can improve binding between particles of the negative electrode active material and binding between the negative electrode active material and the current collector. The type of the negative electrode binder is not particularly limited, provided that its material is stable to the electrolyte or a solvent used in manufacturing of the electrode. In some embodiments, the negative electrode binder includes a resin binder. Examples of the resin binder include, but are not limited to, fluororesins, polyacrylonitrile (PAN), polyimide resins, acrylic resins, polyolefin resins, and the like. When an aqueous solvent is used to prepare a negative electrode mixture slurry, the negative electrode binder includes, but is not limited to, carboxymethyl cellulose (CMC) or its salt, styrene-butadiene rubber (SBR), polyacrylic acid (PAA) or its salt, polyvinyl alcohol, and the like.

The negative electrode may be prepared by using the following method: applying a negative electrode mixture slurry containing the negative electrode active material, the resin binder, and the like on the negative electrode current collector, and after drying, and performing rolling to form a negative electrode active material layer on both sides of the negative electrode current collector, thereby obtaining the negative electrode.

IV. Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic material, or the like that is formed of a material stable to the electrolyte of this application. In some embodiments, the separator includes a porous sheet or nonwoven fabric-like material having an excellent fluid retention property, or the like. Examples of the material of the resin or glass fiber separator may include, but are not limited to, polyolefin, aromatic polyamide, polytetrafluoroethylene, polyethersulfone, glass filter, and the like. In some embodiments, the material of the separator is glass filter. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include, but are not limited to, a three-layer separator formed by laminating polypropylene, polyethylene, and polypropylene in order.

Examples of the material of the inorganic material may include, but are not limited to, oxides such as aluminum oxide and silicon dioxide, nitrides such as aluminum nitride and silicon nitride, and sulfates (for example, barium sulfate and calcium sulfate). The form of the inorganic material may include, but is not limited to, a granular or fibrous form.

The form of the separator may be a thin-film form, and examples thereof include, but are not limited to, a non-woven fabric, a woven fabric, a microporous film, and the like. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator falls within a range defined by any two of the foregoing values. When the thickness of the separator falls within the foregoing range, its insulation performance and mechanical strength can be ensured, helping the rate performance and energy density of the electrochemical apparatus.

When a porous material such as a porous sheet or a nonwoven fabric is used as the separator, the porosity of the separator is random. In some embodiments, the porosity of the separator is greater than 20%, greater than 35%, or greater than 45%. In some embodiments, the porosity of the separator is less than 90%, less than 85%, or less than 75%. In some embodiments, the porosity of the separator falls within a range defined by any two of the foregoing values. When the porosity of the separator falls within the foregoing range, its insulation performance the mechanical strength can be ensured and film resistance can be suppressed, so that the electrochemical apparatus has good rate performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator falls within a range defined by any two of the foregoing values. If the average pore diameter of the separator exceeds the foregoing range, a short circuit is likely to occur. When the average pore diameter of the separator falls within the foregoing range, film resistance can be suppressed while short circuit is prevented, so that the electrochemical apparatus has good rate performance.

V. Components of the electrochemical apparatus

The components of the electrochemical apparatus include an electrode assembly, a collector structure, an outer packing case, and a protective unit.

Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls within a range defined by any two of the foregoing values. When the occupancy of the electrode assembly falls within the foregoing range, the capacity of the

electrochemical apparatus can be ensured, degradation of repeated charge/discharge performance and high temperature storage property caused by an increasing internal pressure can be suppressed, and thereby action of a gas release valve can be prevented.

Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in an electrode area causes a higher internal resistance; therefore, it is also acceptable that more than two terminals are provided in the electrode to decrease the resistance. When the electrode assembly has the foregoing winding structure, more than two lead structures are provided at each of the positive electrode and the negative electrode, and are bundled at the terminals, so as to reduce the internal resistance.

Outer packing case

The material of the outer packing case is not particularly limited, provided that the material is a material stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes, but is not limited to, a sealed packaging structure formed by depositing metal through laser welding, resistance welding, or ultrasonic welding; or a riveting structure formed by using the foregoing metal or the like with a resin pad disposed therebetween. The outer packing case using the laminated film includes, but is not limited to, a sealed packaging structure or the like formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

Protective unit

The protection unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

VI. Application

The electrochemical apparatus according to this application includes any apparatus in which electrochemical reactions take place. Specific examples of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery.

This application also provides an electronic apparatus, including the electrochemical apparatus according to this application.

A purpose of the electrochemical apparatus in this application is not particularly limited. It can be used for any known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

## Examples

The following describes performance evaluation performed based on Examples and Comparative Examples of the lithium-ion battery in this application.

## I. Preparation of a lithium-ion battery

1. Preparation of a negative electrode

Artificial graphite, styrene-butadiene rubber, and sodium carboxymethylcellulose were mixed based on a mass ratio of 96%:2%:2% in deionized water. The mixture was stirred evenly to obtain a negative electrode slurry. The negative electrode slurry was coated onto a copper foil of 12 μm. After steps of drying, cold pressing, cutting, and tab welding, a negative electrode was obtained.

2. Preparation of a positive electrode

A positive electrode active material, a conductive material (Super-P), and polyvinylidene fluoride (PVDF) were mixed based on a mass ratio of 95%:2%:3% in N-methylpyrrolidone (NMP), and then an additive was added. The mixture was stirred evenly to obtain a positive electrode slurry. The positive electrode slurry was coated onto an aluminum foil of 12μm. After steps of drying, cold pressing, cutting, and tab welding, a positive electrode was obtained.

The positive electrode active materials used in Examples or Comparative Examples were commercially purchased, with the specifics shown in the following table:

| Positive electrode active material | Composition | Median particle size (μm) |
|---|---|---|
| Material 1 | $LiCo_{0.998}Ti_{0.0004}Al_{0.0008}O_2$ | 10 |
| Material 2 | $LiCo_{0.998}Mg_{0.0008}Ti_{0.0004}Al_{0.0008}O_2$ | 10 |
| Material 3 | 70 wt% $LiCo_{0.998}Mg_{0.0008}Ti_{0.0004}Al_{0.0008}O_2$ | 15 |
| | 30 wt% $LiCo_{0.994}Mg_{0.0024}Ti_{0.0012}Al_{0.0024}O_2$ | 5 |
| Material 4 | 80 wt% $LiCo_{0.9988}Mg_{0.0008}Ti_{0.0004}O_2$ | 15 |
| | 20 wt% $LiCo_{0.9964}Mg_{0.0024}Ti_{0.0012}O_2$ | 5 |
| Material 5 | 80 wt% $LiCo_{0.998}Mg_{0.0008}Zr_{0.0004}Al_{0.0008}O_2$ | 15 |
| | 20 wt%$LiCo_{0.994}Mg_{0.0024}Zr_{0.0012}Al_{0.0024}O_2$ | 5 |
| Material 6 | 70 wt% $LiCo_{0.9988}Mg_{0.0008}Ti_{0.0004}O_2$ | 20 |
| | 30 wt% $LiCo_{0.9964}Mg_{0.0024}Ti_{0.0012}O_2$ | 5 |

The additives used in Examples or Comparative Examples were commercially purchased, with the specifics shown in the following table:

| Additive | Name (trade name) | Oxidation potential | Reduction potential | Surface tension |
|---|---|---|---|---|
| 1 | (2-ethylhexyl) acrylate | 4.75 V | 0.1 V | 38 mN/m |
| 2 | Arylate non-ionic fluorocarbon acrylate surfactant | 4.8 V | 0.2 V | 35 mN/m |
| 3 | Dodecyl methacrylate | 4.7 V | 0.2 V | 38 mN/m |
| 4 | Acrylic acid (ester) copolymer | 4.8 V | 0.2 V | 36 mN/m |
| 5 | Maleic and acrylic acid | 4.7 V | 0.3 V | 37 mN/m |
| 6 | Polyvinylpyrrolidone (PVP) | 4.5 V | 0.1 V | 45 mN/m |

(continued)

| Additive | Name (trade name) | Oxidation potential | Reduction potential | Surface tension |
|---|---|---|---|---|
| 7 | Polyether siloxane | 4.7 V | 0.5 V | 45 mN/m |
| 8 | Peregal | 4.6 V | 0.8 V | 47 mN/m |
| 9 | Hexadecylsulfonic acid sodium | 4.7 V | 0.7 V | 46 mN/m |

3. Preparation of an electrolyte

Under a dry argon environment, EC, PC, PP, and DEC (based on a weight ratio of 1:1:1:1) were mixed, and $LiPF_6$ was added. The mixture was made even to obtain a base electrolyte, where the concentration of $LiPF_6$ was 1.15 mol/L. Different amounts of additives were added to the base electrolyte, to obtain different electrolytes used in different examples and comparative examples.

Compositions of the electrolytes used in Examples are shown in the following table.

| Name of material | Abbreviation | Name of material | Abbreviation |
|---|---|---|---|
| Ethylene carbonate | EC | Propylene carbonate | PC |
| Diethyl carbonate | DEC | Ethyl propionate | EP |
| Propyl propionate | PP | γ-butyrolactone | GBL |
| Butanedinitrile | SN | Adiponitrile | ADN |
| Ethylene glycol di(2-cyanoethyl) ether | EDN | 1,3,6-hexanetricarbonitrile | HTCN |
| 1,2,3-tris(2-cyanoethoxy) propane | TCEP | Compound of formula 1 | 1a |
| 1,3-propanesulfonate | PS | Fluoroethylene carbonate | FEC |

4. Preparation of a separator

A polyethylene (PE) porous polymer film was used as the separator.

5. Preparation of a lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Method for measuring a contact angle of the positive electrode active material layer with respect to the non-aqueous solvent
3 microliters of diethyl carbonate droplets were dropped on a surface of the positive electrode active material layer, measurement was performed within 100 seconds by using a JC2000D3E contact angle measuring instrument, and fitting was performed by using 5-point fitting method (that is, first taking 2 points on the left and right planes of the droplet to determine the liquid-solid interface, and then taking 3 points on the droplet arc) to obtain a contact angle of the positive electrode active material layer with respect to the non-aqueous solvent. Each sample was measured for at least three times, and at least 3 values with a difference of less than 5° were selected and averaged to obtain the contact angle of the positive electrode active material layer with respect to the non-aqueous solvent.
2. Method for measuring a reaction area of the positive electrode active material layer

A surface area meter (a full-automatic surface area measuring apparatus manufactured by Ohkura Riken Co., Ltd.) was used to predry the sample in a stream of nitrogen gas at 350°C for 15 minutes, and a nitrogen-helium gas mixture with the nitrogen pressure relative to the atmospheric pressure being accurately adjusted to 0.3 was used to measure a

specific area ($m^2/mg$) of the positive electrode active material layer by using single point BET nitrogen adsorption utilizing a gas flow method. The reaction area of the positive electrode active material layer is calculated by using the following equation (Y):

Y=specific surface area of the positive electrode active material layer×weight of the positive electrode active material layer.

3. Method for testing an after-cycling capacity retention rate of the lithium-ion battery

At 45°C, the lithium-ion battery was charged at a constant current of 1C to 4.45 V, then charged at a constant voltage of 4.45 V to a current of 0.05C, and then discharged to 3.0 V at a constant current of 1C. This was the first cycle. The lithium-ion battery experienced 200 such cycles under the foregoing conditions. "1C" refers to a current at which a lithium-ion battery is fully discharged in one hour. The after-cycling capacity retention rate of the lithium-ion battery was calculated by using the following equation:

After-cycling capacity retention rate=(discharge capacity after 200 cycles/discharge capacity at the first cycle)×100%.

4. Method for testing rate performance of the lithium-ion battery

At 25°C, the lithium-ion battery was discharged to 3.0 V at 0.2C, and left standing for 5 minutes. Then the lithium-ion battery was charged to 4.45 V at 0.5C, then charged to 0.05C at a constant voltage of 4.45 V, and left standing for 5 minutes. The discharge rate was adjusted and discharge tests were conducted separately at 0.2C and 1.5C, to obtain the discharge capacities. The capacity obtained at the rate of 1.5C was compared with the capacity obtained at 0.2C, to obtain a C-rate percentage.

5. Method for testing direct-current resistance (DCR) of the lithium-ion battery

At 25°C, the lithium-ion battery was charged to 4.45 V at a constant current of 1.5C, then charged to 0.05C at a constant voltage of 4.45 V, and left standing for 30 minutes. Then the lithium-ion battery was discharged at 0.1 C for 10 seconds, and a voltage value U1 was recorded. Then the lithium-ion battery was discharged at 1 C for 360 seconds, and a voltage value U2 was recorded. "1C" refers to a current at which a battery is fully discharged in one hour. The direct-current resistance of the lithium-ion battery was calculated according to the following equation:

$$\text{Direct-current resistance}=(U2-U1)/(1C-0.1C).$$

Unless otherwise specified, the direct-current resistance in this application is a value of the lithium-ion battery in a 50% state of charge (SOC).

### III. Test result

Table 1 shows the contact angles of the positive electrode active material layer with respect to the non-aqueous solvent in Examples and Comparative Examples and the impact of the additives in the positive electrode active material layer on the performance of the lithium-ion battery. In Examples and Comparative Examples shown in Table 1, the positive electrode active material is material 1, and the electrolyte contains 0.2 wt% of the compound of formula 1a.

Table 1

| | Contact angle | Additive | | After-cycling capacity retention rate | C-rate percentage | DCR (mΩ) |
|---|---|---|---|---|---|---|
| | | Type | Proportion (ppm) | | | |
| Comparative Example 1 | 70° | - | - | 53% | 55% | 70 |
| Comparative Example 2 | 68° | 6 | 1000 | 50% | 52% | 75 |
| Comparative Example 3 | 65° | 7 | 1000 | 51% | 52% | 73 |
| Comparative Example 4 | 70° | 8 | 1000 | 49% | 50% | 78 |
| Comparative Example 5 | 50° | 9 | 1000 | 55% | 46% | 71 |

(continued)

| | Contact angle | Additive | | After-cycling capacity retention rate | C-rate percentage | DCR (mΩ) |
|---|---|---|---|---|---|---|
| | | Type | Proportion (ppm) | | | |
| Example 1 | 45° | 1 | 1000 | 75% | 72% | 60 |
| Example 2 | 40° | 1 | 1500 | 78% | 75% | 51 |
| Example 3 | 35° | 1 | 2000 | 79% | 77% | 45 |
| Example 4 | 30° | 1 | 2500 | 81% | 79% | 43 |
| Example 5 | 20° | 1 | 3000 | 82% | 81% | 41 |
| Example 6 | 10° | 1 | 5000 | 65% | 71% | 48 |
| Example 7 | 30° | 2 | 2000 | 84% | 83% | 40 |
| Example 8 | 28° | 3 | 2000 | 86% | 84% | 39 |
| Example 9 | 25° | 4 | 2000 | 85% | 82% | 36 |
| Example 10 | 20° | 5 | 2000 | 86% | 83% | 35 |

The results show that the additives and their proportions can impact the contact angle of the positive electrode active material layer with respect to the non-aqueous solvent. Some specific additives can increase interaction between the constituents in the positive electrode active material slurry, make the distribution of the slurry more uniform, and thereby reduce the contact angle of the positive electrode active material layer with respect to the non-aqueous solvent. When the contact angle of the positive electrode active material layer with respect to the non-aqueous solvent is not greater than 45°, the after-cycling capacity retention rate and C-rate percentage of the lithium-ion battery can be significantly improved, and the direct-current resistance of the lithium-ion battery can be significantly reduced. On the basis that the contact angle of the positive electrode active material layer with respect to the non-aqueous solvent is not greater than 45°, a controlled proportion of the additive not greater than 3000 ppm may further improve the after-cycling capacity retention rate and C-rate percentage of the lithium-ion battery, and further reduce the direct-current resistance of the lithium-ion battery.

Table 2 shows the impact of the positive electrode active material on performance of the lithium-ion battery. Examples 11 to 15 differ from Example 3 only in the positive electrode active materials listed in Table 2.

**Table 2**

| | Positive electrode active material | After-cycling capacity retention rate | C-rate percentage | DCR (mΩ) |
|---|---|---|---|---|
| Example 3 | Material 1 | 79% | 77% | 45 |
| Example 11 | Material 2 | 82% | 81% | 34 |
| Example 12 | Material 3 | 85% | 84% | 32 |
| Example 13 | Material 4 | 86% | 85% | 30 |
| Example 14 | Material 5 | 81% | 82% | 37 |
| Example 15 | Material 6 | 82% | 85% | 32 |

The results show that when the positive electrode active material includes lithium-containing transition metal oxides having different median particle sizes, the after-cycling capacity retention rate and C-rate percentage of the lithium-ion battery may be further improved, and the direct-current resistance thereof can be further reduced. When the lithium-containing transition metal oxide contains Mg and at least one metal element selected from Ti, Zr, Ge, Nb, Al, and Sn, the cycling performance, rate performance, and direct-current resistance of the lithium-ion battery are significantly improved.

Table 3 shows the impact of the proportion of the compound of formula 1a in the electrolyte on performance of the lithium-ion battery. Examples 16 to 20 and Reference Examples 21 and 22 differ from Example 3 only in the parameters listed in Table 3.

**Table 3**

| | Proportion of 1a (wt%) | After-cycling capacity retention rate | C-rate percentage | DCR (mΩ) |
|---|---|---|---|---|
| Example 3 | 0.2 | 79% | 77% | 45 |
| Example 16 | 0.5 | 85% | 83% | 26 |
| Example 17 | 1 | 86% | 87% | 23 |
| Example 18 | 2 | 80% | 81% | 29 |
| Example 19 | 0.001 | 71% | 75% | 38 |
| Example 20 | 0.005 | 72% | 80% | 36 |
| Reference Example 21 | 0.0008 | 66% | 71% | 49 |
| Reference Example 22 | 3 | 70% | 68% | 51 |

The results show that when the proportion of the compound of formula 1a in the electrolyte falls within a range of 0.001 wt% to 2 wt%, the cycling performance, rate performance, and direct-current resistance of the lithium-ion battery may be further significantly improved. Formula 1b and formula 1c differ from formula 1a only in the length of the carbon chain, and can achieve substantially equivalent effects that formula 1a can achieve.

Table 4 shows the impact of the relationship between the weight of the compound of formula 1a and the reaction area of the positive electrode active material layer on performance of the lithium-ion battery. Examples 23 to 26 differ from Example 3 only in the parameters listed in Table 4.

**Table 4**

| | X (mg) | Y ($m^2$) | X/Y | After-cycling capacity retention rate | C-rate percentage | DCR (mΩ) |
|---|---|---|---|---|---|---|
| Example 3 | 0.3 | 3 | 1 | 79% | 77% | 45 |
| Example 23 | 3.3 | 3 | 10 | 88% | 81% | 39 |
| Example 24 | 10 | 3 | 30 | 83% | 79% | 40 |
| Example 25 | 300 | 3 | 100 | 85% | 82% | 51 |
| Example 26 | 330 | 3 | 110 | 63% | 65% | 55 |

The results show that X mg of the compound of formula 1a in the electrolyte and the reaction area Y $m^2$ of the positive electrode active material layer satisfying $10 \leq X/Y \leq 100$ help further improve the cycling performance, rate performance, and direct-current resistance of the lithium-ion battery.

Table 5 shows the impact of the additives in the electrolyte on performance of the lithium-ion battery. Examples 27 to 34 differ from Example 3 only in the parameters listed in Table 5.

**Table 5**

| | Additive | | After-cycling capacity retention rate | C-rate percentage | DCR (mΩ) |
|---|---|---|---|---|---|
| | Type | Proportion (wt%) | | | |
| Example 3 | - | - | 79% | 77% | 45 |
| Example 27 | SN | 4 | 85% | 78% | 44 |
| Example 28 | ADN | 3 | 86% | 78.5% | 43 |
| Example 29 | HTCN | 3 | 88% | 79% | 44 |
| Example 30 | SN | 3 | 84% | 79% | 43 |
| Example 31 | HTCN | 1 | 89% | 80% | 43 |
| Example 32 | TCEP | 3 | 92% | 81% | 40 |
| Example 33 | PS | 0.5 | 88% | 82% | 39 |

(continued)

| | Additive | | After-cycling capacity retention rate | C-rate percentage | DCR (mΩ) |
|---|---|---|---|---|---|
| | Type | Proportion (wt%) | | | |
| Example 34 | FEC | 2 | 90% | 82% | 71 |

The results show that the electrolyte further containing additives helps further improve the cycling performance, rate performance and direct-current resistance of the lithium-ion battery.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example.

## Claims

1. An electrochemical apparatus, comprising: a positive electrode, a negative electrode and an electrolyte; wherein the positive electrode comprises a positive electrode active material layer; and a contact angle of the positive electrode active material layer with respect to a non-aqueous solvent, as measured by a contact angle measurement method, is not greater than 45°, wherein the contact angle measurement method refers to, after 3 microliters of diethyl carbonate droplets are dropped on a surface of the positive electrode active material layer, measuring a contact angle of the droplets with the surface of the positive electrode active material layer within 100 seconds, **characterized in that**

   the electrolyte further contains a compound of formula 1:

   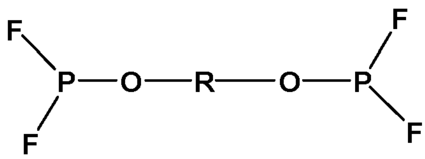 formula 1,

   wherein R is a substituted or unsubstituted $C_1$-$C_{10}$ alkyl group, and in the case of substitution, a substituent group is halogen, and
   based on a total weight of the electrolyte, a proportion of the compound of formula 1 is 0.001 wt% to 2 wt%.

2. The electrochemical apparatus according to claim 1, wherein the positive electrode active material layer comprises an additive having a hydrophilic group and a lipophilic group.

3. The electrochemical apparatus according to claim 1 or 2, wherein the additive has at least one of the following characteristics:

   (a) an oxidation potential of not less than 4.5 V and a reduction potential of not greater than 0.5 V;
   (b) a surface tension of not greater than 40 mN/m;
   (c) comprising an unsaturated carboxylic acid group; and
   (d) a proportion of not greater than 3000 ppm based on a total weight of the positive electrode active material layer.

4. The electrochemical apparatus according to claim 2, wherein the additive comprises at least one of 2-dodecyl acrylate, polyethylene glycol monomethyl ether acrylate, polyethylene glycol dimethacrylate, acrylic acid (2-ethylhexyl) acrylate, acrylate non-ionic fluorocarbon acrylate surfactant, dodecyl methacrylate, acrylic acid (ester) copolymer, copolymer of maleic and acrylic acid, or ethylene acrylic acid copolymer.

5. The electrochemical apparatus according to claim 1, wherein the compound of formula 1 contains at least one of the following structural formulas:

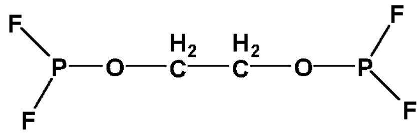 formula 1a;

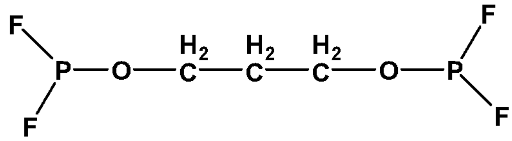 formula 1b;

or

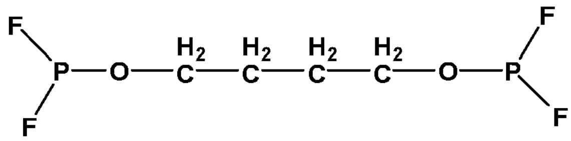 formula 1c.

**6.** The electrochemical apparatus according to claim 1, wherein X mg of the compound of formula 1 in the electrolyte and a reaction area Y $m^2$ of the positive electrode active material layer satisfy the following relationship: $10 \leq X/Y \leq 100$.

**7.** The electrochemical apparatus according to claim 1, wherein the positive electrode active material layer comprises a positive electrode active material, and the positive electrode active material comprises lithium-containing transition metal oxides having different median particle sizes.

**8.** The electrochemical apparatus according to claim 7, wherein the lithium-containing transition metal oxide comprises a compound represented by a general formula (1),

$$Li_aM1_bM2_cM3_dO_2 \qquad (1),$$

wherein,

M1 is at least one selected from Co, Ni, or Mn;
M2 is at least one selected from Mg, Ti, Zr, Ge, Nb, Al, or Sn;
M3 is an element other than Li, M1, and M2;

$$0.5 \leq a < 1.1;$$

$$0.8 \leq b < 1.2;$$

$$0.002 \leq c \leq 0.05;$$

and

$$0 \leq d \leq 0.05.$$

**9.** The electrochemical apparatus according to claim 8, wherein the lithium-containing transition metal oxide comprises Mg and at least one metal element selected from the group consisting of Ti, Zr, Ge, Nb, Al, and Sn.

**10.** An electronic apparatus, comprising the electrochemical apparatus according to any one of claims 1 to 9.

## Patentansprüche

1. Elektrochemische Vorrichtung, umfassend: eine positive Elektrode, eine negative Elektrode und einen Elektrolyten, wobei die positive Elektrode eine aktive Materialschicht der positiven Elektrode umfasst und ein mittels eines Kontaktwinkelmessverfahrens gemessener Kontaktwinkel der aktiven Materialschicht der positiven Elektrode in Bezug auf eine nicht wässriges Lösungsmittel nicht größer als 45° ist, wobei sich das Kontaktwinkelmessverfahren darauf bezieht, dass nach dem Auftropfen von 3 Mikrolitern Diethylcarbonattropfen auf eine Oberfläche der aktiven Materialschicht der positiven Elektrode innerhalb von 100 Sekunden ein Kontaktwinkel der Tropfen an der Oberfläche der aktiven Materialschicht der positiven Elektrode gemessen wird, **dadurch gekennzeichnet, dass** der Elektrolyt ferner eine Verbindung mit der folgenden Formel 1 enthält:

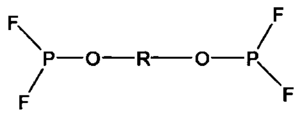
formula 1,

,

wobei R eine substituierte oder unsubstituierte C1-C10-Alkylgruppe ist und im Falle der Substitution eine Substituentengruppe Halogen ist, und wobei ein Anteil der Verbindung der Formel 1 basierend auf einem Gesamtgewicht des Elektrolyten 0,001 Gew.-% bis 2 Gew.-% beträgt.

2. Elektrochemische Vorrichtung nach Anspruch 1, wobei die aktive Materialschicht der positiven Elektrode ein Additiv, aufweisend eine hydrophile Gruppe und eine lipophile Gruppe, umfasst.

3. Elektrochemische Vorrichtung nach Anspruch 1 oder 2, wobei das Additiv mindestens eine der folgenden Eigenschaften aufweist:

   (a) ein Oxidationspotenzial von mindestens 4,5 V und ein Reduktionspotenzial von höchstens 0,5 V;
   (b) eine Oberflächenspannung von nicht mehr als 40 mN/m;
   (c) umfassend eine ungesättigte Carboxylgruppe und
   (d) ein Anteil von nicht mehr als 3000 ppm, bezogen auf das Gesamtgewicht der aktiven Materialschicht der positiven Elektrode.

4. Elektrochemische Vorrichtung nach Anspruch 2, wobei das Additiv mindestens einen der folgenden Stoffe umfasst: 2-Dodecylacrylat, Polyethylenglycolmonomethyletheracrylat, Polyethylenglycoldimethacrylat, Acrylsäure-(2-ethylhexyl)ester, nichtionisches Fluorkohlenstoff-Acrylat- Tensid auf Acrylatbasis, Dodecylmethacrylat, Acrylsäure-(ester)-Copolymer, Copolymer aus Maleinsäure und Acrylsäure oder Ethylen-Acrylsäure-Copolymer.

5. Elektrochemische Vorrichtung nach Anspruch 1, wobei die Verbindung der Formel 1 mindestens eine der folgenden Strukturformeln enthält:

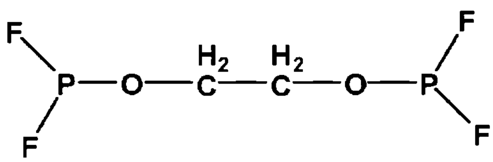
formula 1a;

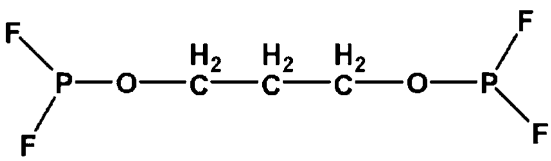
formula 1b;

oder

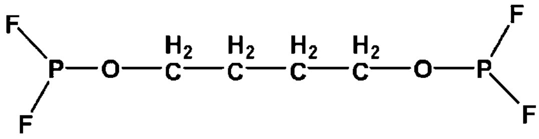
formula 1c.

**6.** Elektrochemische Vorrichtung nach Anspruch 1, wobei X mg der Verbindung der Formel 1 in dem Elektrolyten und eine Reaktionsfläche Y $m^2$ der aktiven Materialschicht der positiven Elektrode die folgende Beziehung erfüllen: $10 \leq X/Y \leq 100$.

**7.** Elektrochemische Vorrichtung nach Anspruch 1, wobei die aktive Materialschicht der positiven Elektrode ein aktives Material der positiven Elektrode umfasst und das aktive Material der positiven Elektrode lithiumhaltige Übergangsmetalloxide, aufweisend unterschiedliche mittlere Teilchengrößen, umfasst.

**8.** Elektrochemische Vorrichtung nach Anspruch 7, wobei das lithiumhaltige Übergangsmetalloxid eine durch eine allgemeine Formel (1) dargestellte Verbindung umfasst,

$$Li_aM1_bM2_cM3_dO_2 \qquad (1),$$

wobei

M1 mindestens ein Element ist, das aus Co, Ni oder Mn ausgewählt ist;
M2 mindestens ein Element ist, das aus Mg, Ti, Zr, Ge, Nb, Al oder Sn ausgewählt ist;
M3 ein anderes Element als Li, M1 und M2 ist;

$$0{,}5 \leq a < 1{,}1;$$

$$0{,}8 \leq b < 1{,}2;$$

$$0{,}002 \leq c \leq 0{,}05$$

und

$$0 \leq d \leq 0{,}05.$$

**9.** Elektrochemische Vorrichtung nach Anspruch 8, wobei das lithiumhaltige Übergangsmetalloxid Mg und mindestens ein Metallelement, ausgewählt aus der Gruppe bestehend aus Ti, Zr, Ge, Nb, Al und Sn, umfasst.

**10.** Elektronische Vorrichtung, umfassend die elektrochemische Vorrichtung nach einem der Ansprüche 1 bis 9.

**Revendications**

**1.** Appareil électrochimique comprenant : une électrode positive, une électrode négative et un électrolyte ; dans lequel l'électrode positive comprend une couche de matériau actif d'électrode positive ; et un angle de contact de la couche de matériau actif d'électrode positive par rapport à un solvant non aqueux, tel que mesuré par un procédé de mesure d'angle de contact, n'est pas supérieur à 45°, dans lequel le procédé de mesure d'angle de contact consistant, après que 3 microlitres de gouttelettes de carbonate de diéthyle ont été déposés sur une surface de la couche de matériau actif d'électrode positive, à mesurer un angle de contact des gouttelettes avec la surface de la couche de matériau actif d'électrode positive en l'espace de 100 secondes, **caractérisé en ce que**

l'électrolyte contient en outre un composé de formule 1 :

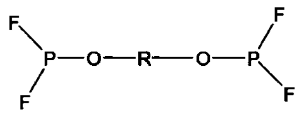
formula 1,

,

dans lequel R est un groupe alkyle en C1-C10 substitué ou non substitué et, dans le cas d'une substitution, un groupe substituant est l'halogène, et

par rapport au poids total de l'électrolyte, une proportion du composé de formule 1 est de 0,001 % en poids à 2 % en poids.

**2.** Appareil électrochimique selon la revendication 1, dans lequel la couche de matériau actif de l'électrode positive comprend un additif ayant un groupe hydrophile et un groupe lipophile.

**3.** Appareil électrochimique selon la revendication 1 ou 2, dans lequel l'additif présente au moins l'une des caractéristiques suivantes :

(a) un potentiel d'oxydation non inférieur à 4,5 V et un potentiel de réduction non supérieur à 0,5 V ;
(b) une tension superficielle non supérieure à 40 mN/m ;
(c) comprenant un groupe acide carboxylique insaturé ; et
(d) une proportion ne dépassant pas 3 000 ppm par rapport au poids total de la couche de matériau actif de l'électrode positive.

**4.** Appareil électrochimique selon la revendication 2, dans lequel l'additif comprend au moins un des éléments suivants : acrylate de 2-dodécyle, acrylate d'éther monométhylique de polyéthylène glycol, diméthacrylate de polyéthylène glycol, acrylate d'acide acrylique (2-éthylhexyle), surfactant acrylique non ionique de fluorocarbone, méthacrylate de dodécyle, copolymère (ester) d'acide acrylique, copolymère d'acide maléique et d'acide acrylique, ou copolymère d'acide éthylène-acrylique.

**5.** Appareil électrochimique selon la revendication 1, dans lequel le composé de formule 1 contient au moins l'une des formules structurelles suivantes :

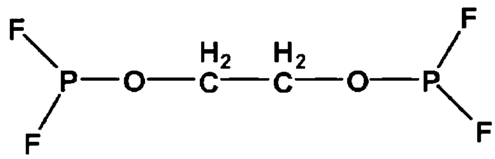
formula 1a;

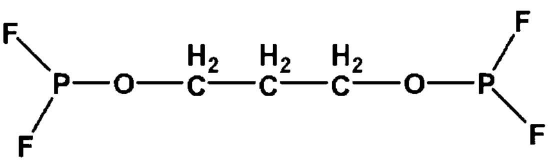
formula 1b;

ou

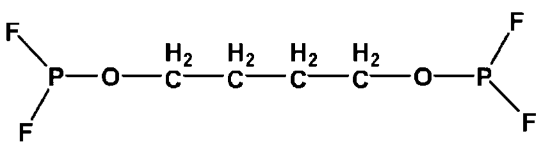
formula 1c.

**6.** Appareil électrochimique selon la revendication 1, dans lequel X mg du composé de formule 1 dans l'électrolyte et une surface de réaction Y $m^2$ de la couche de matériau actif de l'électrode positive satisfont à la relation suivante : $10 \leq X/Y \leq 100$.

**7.** Appareil électrochimique selon la revendication 1, dans lequel la couche de matériau actif de l'électrode positive comprend un matériau actif de l'électrode positive, et le matériau actif de l'électrode positive comprend des oxydes de

métaux de transition contenant du lithium et ayant des tailles de particules médianes différentes.

**8.** Appareil électrochimique selon la revendication 7, dans lequel l'oxyde de métal de transition contenant du lithium comprend un composé représenté par la formule générale (1),

$$Li_aM1_bM2_cM3_dO_2 \qquad (1),$$

dans lequel,

M1 est au moins un des éléments suivants : Co, Ni ou Mn ;
M2 est au moins un des éléments suivants : Mg, Ti, Zr, Ge, Nb, Al ou Sn ; M3 est un élément autre que Li, M1 et M2 ;

$$0.5 \leq a < 1.1 \text{ ;}$$

$$0.8 \leq b < 1.2 \text{ ;}$$

$$0{,}002 \leq c \leq 0{,}05 \text{ ;}$$

et

$$0 \leq d \leq 0.05.$$

**9.** Appareil électrochimique selon la revendication 8, dans lequel l'oxyde de métal de transition contenant du lithium comprend du Mg et au moins un élément métallique choisi dans le groupe constitué par Ti, Zr, Ge, Nb, Al et Sn.

**10.** Appareil électronique comprenant l'appareil électrochimique selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014178732 A1
- US 2011045360 A1